# EUROPEAN PATENT APPLICATION

(11) **EP 1 653 417 A1**
(43) Date of publication of application: **03.05.2006**
(21) Application number: 05023375.8
(22) Date of filing: 26.10.2005
(51) Int. Cl.: G07F 17/32

(54) **Gaming system and gaming machine**

(30) Priority: 29.10.2004 JP 2004316295
(71) Applicant: Aruze Corp., Tokyo 135-0063 (JP)
(72) Inventor: Iwamoto, Hideaki, Tokyo 135-0063 (JP)
(74) Representative: HOFFMANN EITLE

(57) **Abstract**

A slot-gaming system includes a management machine and gaming machines connected to the management machine executing a base game depending on a gaming value credited by a player. The gaming machine transmits a collected gaming value, which is a part of the gaming value credited by the player, to the management machine, the management machine stores an accumulated gaming value obtained by adding the collected gaming value, and the slot machine executes a lottery for a Mystery jackpot, and determination is made on win and loss whereby when the win is determined, a notification of the win is transmitted to the management machine which upon receipt of the notification, is operative to transmit a value of a whole of or a part of the accumulated gaming value to the gaming machine to which the win is notified.

## Description

### BACKGROUND OF THE INVENTION

### 1. Field of the Invention

The present invention relates to gaming systems and gaming machines and, more particularly, to a gaming system and gaming machine that are able to executed a base game and a bonus game such as a jackpot.

### 2. Description of the Related art

Gaming machines, installed in game arcades such as casinos or the like, include a system so called a "Mystery jackpot system". As used herein, the term "Mystery jackpot system" refers to a system, comprised of a plurality of gaming machines and a host computer (management machine) connected to the gaming machines, which functions as a system that executes a Mystery Jackpot (a game programmed to increase an amusement property and renders all players to have strong desires to obtain a jackpot (an accumulated common bonus) whereby a fevered game can be realized while leaving an attraction of the jackpot which is executed randomly). With the Mystery jackpot system, among values (hereinafter referred to as gaming values) such as medals or coins used in a gaming machine, a predetermined number of the gaming values are automatically transferred to the host computer from the respective gaming machines to allow the host computer to accumulate the received gaming values as the jackpot (reserve fund). The host computer functions as a system by which when a predetermined condition results in, a lottery, related to a payment for the accumulated gaming value, is executed for paying out a whole of or a part of the accumulated gaming value to either one of the gaming machines or a player who plays with the same (as disclosed, for instance, in Japanese Patent Laid Open Publication No. 2004-267428 (in paragraphs [0010] and [0029]) and Japanese Patent Laid Open Publication No. 2004-130119 (in paragraph [0011])).

The player, who plays a game with the gaming machine connected to the Mystery jackpot system, is able to obtain the gaming values in two kinds of methods as follows: 1) the gaming value that is obtained upon operation (playing the game) of the gaming machine executed by the player himself; 2) the gaming value (jackpot) that is obtained with the Mystery jackpot system. Therefore, the player is able to have a chance to get a massive amount of the gaming values, resulting in an increase in desires of the player to play the game.

While the jackpot system, mentioned above, is able to increase the desires of the player to play the game, issues are encountered as described below.

That is, when one player obtains the jackpot, the host computer notifies the jackpot-obtained player his obtained mount of the gaming value (fist notification), and the host computer also notifies the other players that one of the other player who plays the gaming machine connecting this Mystery jackpot system obtains the jackpot (second notification). In this notifying operation, the host computer notifies the first and second notification at the same timing.

Therefore, making an attempt to perform complicated effects during the occurrence of the win on the jackpot results in an increase in communication loads in exchange of commands between the host computer and the associated gaming machines, and operational loads such as operations for the timings to be synchronized, causing issues to occur wherein among other things, the greater the number of gaming machines involved in the Mystery jackpot system, the greater will be the load with the resultant difficulty in executing the complicated effects.

It is, therefore, an object of the present invention to provide a Mystery jackpot system operative such that in a jackpot game using a plurality of gaming machines, the respective gaming machines are able to perform lotteries and effects in complicated mechanisms.

### SUMMARY OF THE INVENTION

To address such issues set forth above, the present invention has features described below.

According to a first aspect of the present invention, there is provided a gaming system that comprises a management machine and at least one gaming machine connected to the management machine with communication capabilities to execute a base game in consideration of gaming values credited by a player.

The gaming system features that the gaming machines transmit at least a part of the gaming values (collected gaming values) credited by the player, to the management machine which in turn stores as an accumulated gaming values resulting from adding the collected gaming values transmitted form the gaming machines, respectively, to allow the gaming machine to execute at least one lottery for determining win and loss of a bonus game whereby when the win is determined on the bonus game, the occurrence of the win is notified to the management machine and upon receipt of the notification of the win, a whole of or a part of the accumulated gaming values is transmitted to the gaming machine from which the occurrence of the win is notified.

Also, as used herein, the term "base game" refers to a game to be executed by the gaming machine and may include all games aside from the bonus game. Further, as used herein, the term "bonus game" refers to a game that is related to the win on the accumulated gaming values resulting from adding the respective collected gaming values and may include, for instance, the Mystery jackpot. As used herein, the term "Mystery jackpot" refers to the bonus game of which the win is determined depending on a condition under which a player is not aware of the occurrence of the winning or a condition under which no presence of the winning is notified to the player.

With the gaming system of this aspect, under circumstances where the bonus game like the Mystery jackpot system is executed, complicated lotteries and effects can be executed without causing the management machine, which performs control related to the bonus game, to bear loads.

According to a second aspect of the present invention, there is provided a gaming system that is comprised of a management machine and a gaming machine, operative to execute a base game depending on gaming values credited by a player, for executing a bonus game associated with the provision of an accumulated gaming value resulting from accumulating at least a part of the paid out gaming values.

With such a system, the management machine includes a communication device (such as, for instance, a communication interface) to perform communication with the gaming machines, and an accumulation processor (such as, for instance, a gaming value accumulation processor and an accumulated value storage device) for adding collected gaming values, which is at least a part of the credited gaming values, to generate an accumulated gaming value to be stored. Further, the gaming machine of such a system includes a base game device (such as, for instance, a microcomputer and reels) operative to execute the base game depending on the gaming values credited by the player, a collection notification device (such as a collected gaming value processor) notifying a collected gaming value depending on the gaming values credited to the management machine, and a lottery device (such as, for instance, a primary lottery execution section and/or a secondary lottery execution section) operative to execute the lottery related to the win on the accumulated gaming value stored in the management machine and notify the win of the lottery to the management machine.

With the gaming system of such an aspect, operations related to the lotteries are executed with the gaming machine, thereby providing a bonus game like the Mystery jackpot system with capabilities of executing complicated lotteries and effects without causing loads to be applied to the management machine that performs control associated with the bonus game.

Such a system may take a feature that includes a first lottery section (such as, for instance, a primary lottery execution section) determining win and loss on a first lottery, and a second lottery section (such as, for instance, a secondary lottery execution section) determining win and loss on a second lottery, and a second lottery section when the win is determined on the first lottery.

According to a third aspect of the present invention, there is provided a gaming machine operative to execute a base game depending on a gaming value credited by a player and a' bonus game to determine whether providing an accumulated gaming value which is obtained by adding at least a part of the credited gaming value.

The gaming machine comprises a base gaming device (such as, for instance, a microcomputer and reels) executing a base game depending on a gaming value credited by a player, a collection processor (such as, for instance, a collected gaming value processor) determining a collected gaming value depending on the credited gaming value, and a lottery device (such as, for instance, a primary lottery execution section and/or secondary lottery execution device) executing a lottery related to the win on an accumulated gaming value resulting from accumulating the collected gaming value determined by the collection processor.

With gaming machine of this aspect, operations related to the lottery are executed on the gaming machine, making it possible to perform complicated operation for lotteries and effects without causing a load to be applied to the management machine for executing control related to a bonus game when providing the bonus game like the Mystery jackpot system.

With such a system may take a feature that includes a first lottery section (such as, for instance, a primary lottery execution section) determining win and loss on a first lottery, and a second lottery section (such as, for instance, a secondary lottery execution section) determining win and loss on a second lottery, and a second lottery section when the winning is determined on the first lottery.

Further, the gaming machine may include an accumulation device (such as, for instance, a gaming value accumulation processor and an accumulated gaming value storage device) operative to add the collected gaming value, which is obtained by adding at least a part of the paid out gaming value, to generate an accumulated gaming value for storage.

With such a structure, it becomes possible to provide a bonus game, like the Mystery jackpot system, without providing a management machine aside from the gaming machine.

### BRIEF DESCRIPTION OF THE DRAWINGS

FIG. 1 is an external appearance perspective view of a gaming machine of a gaming system according to the present invention.
FIG. 2 is a block diagram showing a structure of a control system of the gaming machine.
FIG. 3 is a block diagram showing one example of the gaming system.
FIG. 4 is a functional block diagram of the gaming machine (microcomputer).
FIG. 5 is a functional block diagram of a management machine.
FIG. 6A is a sequence diagram showing one operation example of the gaming system.
FIG. 6B is a sequence diagram showing one operation example, consecutive to that shown in FIG. 6A, of the gaming system.
FIG. 6C is a sequence diagram showing one operation example, consecutive to that shown in FIG. 6B, of the gaming system.

### DETAILED DESCRIPTION OF THE INVENTION

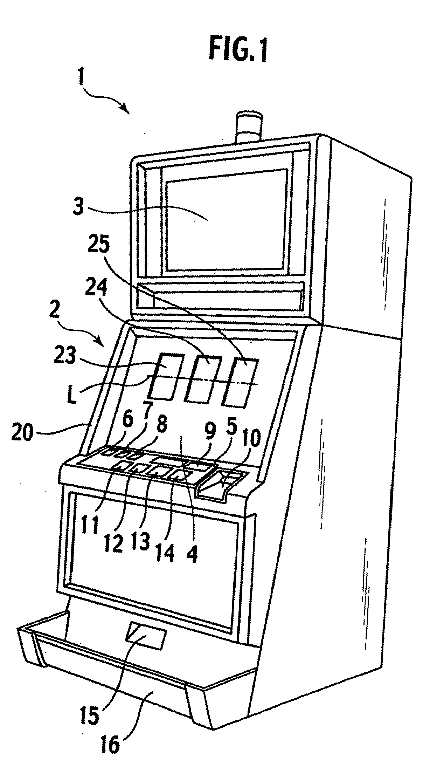

Hereunder; one embodiment of the present invention is described in detail with reference to FIGS. 1 to 6C of the accompanying drawings.

### [1. Structural Example of System of Embodiment]

With reference to FIG. 1, description is made of a fundamental structure of a Mystery jackpot system (also called as a progressive system and hereinafter generally referred to as a "Mystery jackpot system") of the presently filed embodiment. Also, as used herein, the term the "Mystery jackpot system" refers to a system, comprised with a management machine and at least one gaming machine, which credits either one of the gaming machines with a gaming value depending on predetermined conditions (such as, for instance, a payout condition, the occurrence of a winning upon lottery, etc.), of at least one part of an accumulated gaming value (such as, for instance, an accumulated common bonus: Jackpot) to be accumulatively added on the basis of a game to be played by a player.

FIG. 1 is an overall perspective view of the mystery jackpot system of the presently filed embodiment according to the present invention. Although FIG. 1 shows one gaming machine (slot machine), the present invention may be implemented in a structure that includes more than two gaming machines are connected to a host computer (management machine).

In FIG. 1, a slot machine 1 includes a cabinet 2, forming a whole of the gaming-slot machine, which has a front and upper area on which an upper liquid crystal display 3 is located and has a front and lower area on which a lower liquid crystal display 4 is located. The upper liquid crystal display 3 is comprised of a general-purpose liquid crystal display of the type that is generally used and the lower liquid crystal display 4 is comprised of a so-called transparent liquid crystal display.

Located in an area beneath the lower liquid crystal display 4 is an operation table 5, protruding frontward, on which a CALL-OUT button 6, a PAYOUT button 7 and a HELP button 8 are located. Further, a coin insertion section 9 and a bill insertion section 10 are disposed in areas rightward of the HELP button 8. Furthermore, a 1-BET button 11, a SPIN/REPEAT button 12, a 3-BET button 13 and a 5-BET button 14 are located on the operation table 5 at a front area thereof.

The CALL-OUT BUTTON 6 functions as a button that is pressed for calling out of a shop assistant (a staff of game the arcade) when making, for example, an exchanging a bill into coins. The PAYOUT button 7, functioning as a button that is pressed when finishing a base game, is operative such that when pressed, coins got in the game are paid out from a coin payout opening 15 to a coin receiving tray 16. Also, the PAYOUT button 7 includes a PAYOUT switch 41, which will be described below in detail, and pressing the PAYOUT button 7 renders the PAYOUT switch 41 to output a switch signal to a CPU 30. The HELP button 8, functioning as a button that is pressed when operation methods of the game are unclear, is operative such that when pressed, the upper liquid crystal display 3 and the lower liquid crystal display 4 are provided with a variety of HELP information. The HELP button 8 includes a HELP switch 42, which will be described below in detail, and pressing the HELP button 8 renders the HELP switch 42 to output a switch signal to the CPU 30.

A coin sensor 43 is located in the coin insertion section 9 to be operative such that when a coin is inserted to the coin insertion section 9, the coin sensor 43 generates a coin detection signal that is outputted to the CPU 30. Further, located in the bill insertion section 10 is a bill sensor 44 operative such that when a bill is inserted to the bill insertion section 10, a bill detection signal is outputted to the CPU 30.

By pressing the 1-BET button 11 once, one coin is credited. The 1-BET switch 11 includes a 1-BET switch 38, which will be described below in detail, and pressing the 1-BET button 11 renders the 1-BET switch 38 to output a switch signal to the CPU 30.

The SPIN/REPEAT button 12 functions as a button that is pressed when starting the rotation of reels, described below, to begin the game with the number of current credits or preceding credits. The SPIN/REPEAT button 12 includes a SPIN/REPEAT switch 37 and pressing the SPIN/REPEAT button 12 renders the SPIN/REPEAT switch 37 to output a switch signal to the CPU 30. Meanwhile, when the SPIN/REPEAT button 12 is pressed, 1 through 5 coins can be credited.

When the 3-BET button 13 is pressed, the game stars with the three coins are credited. The 3-BET button 13 includes a 3-BET switch 39, which will be described below, and by pressing the 3-BET button 13 renders the 3-BET switch 39 to output a switch signal to the CPU 30. Likewise, when the 5-BET button 14 is pressed, the game (including a bonus game) starts with the five coins are credited. The 5-BET button 14 includes a 5-BET switch 40, which will be described below, and pressing the 5-BET button 14 renders the 5-BET switch 40 to output a switch signal to the CPU 30.

Further, the coin payout opening 15 is formed at a lower area of the cabinet 2 in which the coin receiving tray 16 is also disposed for receiving the coins paid out from the coin payout opening 15. A coin detector 52, composed of a sensor (not shown), is located inside the coin payout opening 15 to detect the number of the coins paid out from the coin payout opening 15.

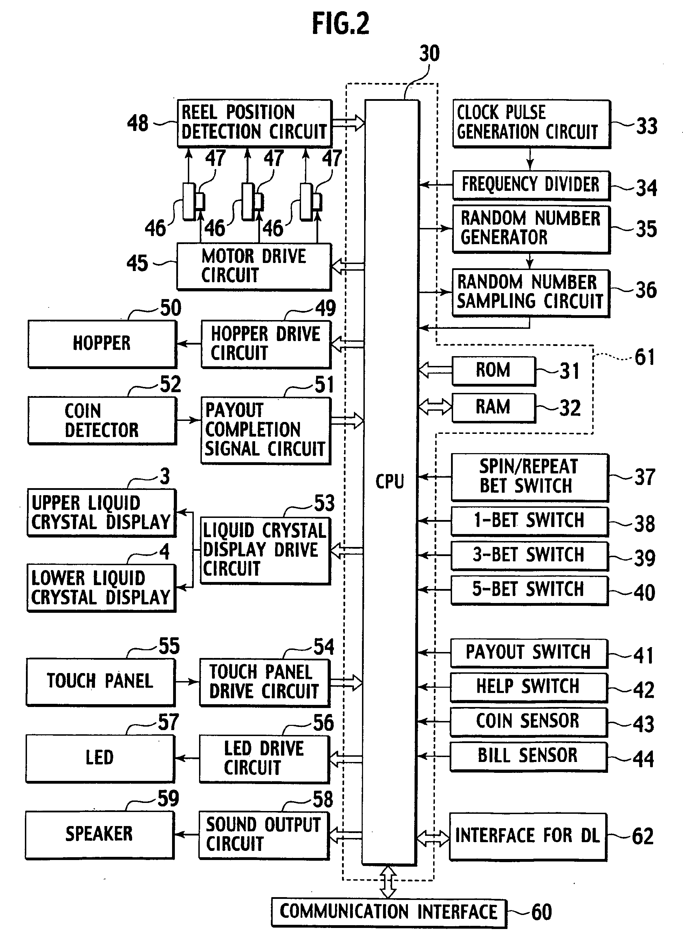

Now, a structure, related to a control system of the slot machine 1, is described below with reference to FIG. 2. The control system of the slot machine 1, shown in FIG. 2, is basically comprised with a microcomputer 61 including the CPU 30 as a major component element to which a ROM 31 and RAM 32 are connected. The ROM 31 stores therein a game control program, various effect programs rendering the upper liquid crystal display 3 and the lower liquid crystal display 4 operative to perform various effects, a lottery table for enabling the lottery on a variety of winning combinations, additional various programs needed for controlling the slot machine 1, and a data table, all of which are described below. Moreover, the RAM 32 functions as a memory for temporarily storing various data resulting from calculations of the CPU 30. Also, the RAM 32 are used in cooperation with the CPU 30 and the ROM 31 for the purpose of starting up a progressive program, of the present invention, which is stored in a memory device such as a hard disc (not shown).

Further, a clock pulse generation circuit 33 for generating clock pulses, a frequency divider 34, a random number generator 35 for generating a random number, and a sampling circuit 36 are connected to the CPU respectively. The random number, which is obtained by the sampling circuit 36 upon sampling operation thereof, is used for executing a variety of lotteries for winning combinations, effects, etc. In addition, connected to the CPU 30 are the SPIN/REPEAT switch 37, provided in the SPIN/REPEAT button 12, the 1-BET switch 38 provided in the 1-BET button 11, the 3-BET switch 39 provided in the 3-BET button 13, the 5-BET switch 40 provided in the 5-BET button 14, the PAYOUT switch 41 provided in the PAYOUT button 7, and the HELP switch 42 provided in the HELP button 8. Upon receipt of the switch signals outputted from the respective switches 37, 38, 39, 40, 41, 42 when the buttons 7, 8, 11, 12, 13, 14 are pressed, the CPU 30 performs controls to execute various operations associated with the buttons, respectively.

Further, the coin sensor 43, disposed in the coin insertion section 9, and the bill sensor 44, disposed in the bill insertion section 10, are connected to the CPU 30, respectively. The coin sensor 43 detects a coin inserted to the coin insertion section 9 and the CPU 30 calculates the number of inserted coins in response to coin detection signals outputted from the coin sensor 43. The bill sensor 44 detects a kind of and amount of bills inserted into the bill insertion section 10 and the CPU 30 calculates the number of coins in value equivalent to the inserted bills.

Three stepping motors 47, by which the respective reels 46 are rotatably driven, are connected through the motor drive circuit 45 to the CPU 30. Further the reel position detection circuit 48 is connected to the CPU 30. As motor drive signals are outputted from the CPU 30 to the motor drive circuit 45, the respective stepping motors 47 and the motor drive circuit 45 allow the reels 46 to be rotated.

When this takes place, after the rotations of the reels 46 have been started, the number of drive pulses supplied to the stepping motors 47, respectively, is calculated, with the resultant calculated value being written in a predetermined area of the RAM 32. Further, a reset pulse is outputted from each reel 46 for each revolution thereof and inputted to the CPU 30 through the reel position detection circuit 48. As the reset pulses are inputted to the CPU 30 in such a way, the calculated values, written in the RAM 32, are reset to "0", upon which the CPU 30 recognizes rotational positions of symbols (not shown), formed on the respective reels 46, in accordance with the symbol table in which the rotational positions of the respective reels 46, stored in the ROM 31, and the symbols on the respective reels 46 at outer peripheries thereof.

A hopper 50 is connected to the CPU 30 via a hopper drive circuit 49. As a drive signal is outputted from the CPU 30 to the hopper drive circuit 49, the hopper 50 is rendered operative to pay out a predetermined number of coins from the coin payout opening 15.

Further, the coin detector 52 is connected to the CPU 30 via a payout completion signal circuit 51. The coin detector 52 is mounted inside the coin payout opening to be operative to output a coin payout detection signal to the payout completion signal circuit 51 and if the presence of a predetermined number of the coins which is paid out from the coin payout opening 15 is detected, the coin detector 52 operates to output the coin payout detection signal to the payout completion signal circuit 51 which in turns outputs a payout completion signal to the CPU 30.

Furthermore, the upper and lower liquid crystal displays 3, 4 are connected to the CPU 30 via a liquid crystal drive circuit 53. The liquid crystal drive circuit 53 may include a graphic board or the like. Moreover, the upper and lower liquid crystal displays 3, 4 may be controlled with separate liquid crystal drive circuits, respectively. Also, a touch panel 55 is connected to the CPU 30 via a touch panel drive circuit 54.

In addition, LEDs 57 are connected to the CPU 30 via an LED drive circuit 56. The LEDs 7 are controllably turned on and off for lighting up and off by the LED drive circuit 56 in response to drive signals outputted from the CPU 30. Further, a sound output circuit 58 and a speaker 59 are connected to the CPU 30 to allow the speaker 59 to reproduce a variety of effect sounds when executing various effects in response to output signals from the sound output circuit 58. Also, a communication interface (I/F) 60 is additionally connected to the CPU 30 to function as a communication port to establish communication between the management machine 300 and the slot machine 1. Besides, a download (DL) interface 62 is connected to the CPU 30 to receive the programs and software data from an external storage medium to allow the CPU 30 to retrieve a program, on which a predetermined operation sequence of the current slot machine 1 is described, and software from the external source for storage in the RAM 32 or a storage device (hard disc or the like) (not shown).

Further, the slot machine 1 has a structure, which includes a storage area operative to store a predetermined program, such as a program for the Mystery jackpot system according to the present invention, such as a board (not shown) to which, for instance, at least a hard disc and an optical disc drive or a memory card, such as a Compact Flush (Trademark) or the like, can be installed and which has a storage area that is able to store a predetermined program such as a progressive program stored in the Compact Flush (Trademark). For instance, when storing the progressive program written in the optical disc, the progressive program is written in from the optical disc using the optical disc drive and stored in the hard disc (by installing, downloading and file copying). Furthermore, when storing the progressive program written in the memory card, the memory card is installed onto the board, which is mentioned above, to download the progressive program to be stored in the storage device equipped in the board.

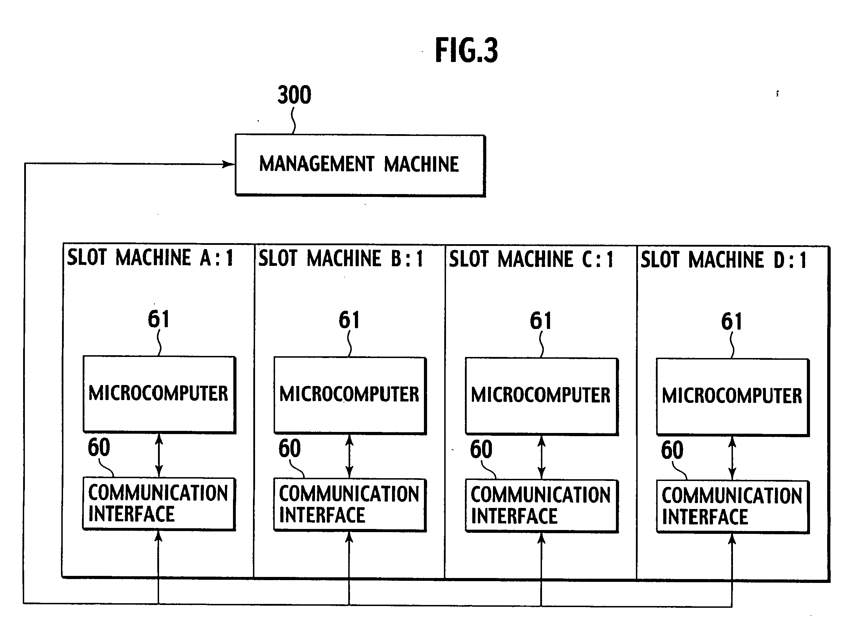

Now, referring to FIG. 3, description is made of the Mystery jackpot system connected via the communication interface 60 to the management machine (host computer) 300 (FIG. 3) to which a plurality of slot machines 1 (in FIG.3, slot machines A, B, C, D) are connected. FIG. 3 is a view typically showing the Mystery jackpot system.

With the Mystery Jackpot System shown in FIG. 3, a plurality (four pieces in the presently filed embodiment) of the slot machines 1 are connected to the management machine 300 via communication interfaces 60 thereof. Although a connection structure is shown in FIG. 3 in the form of a star topology centering on the management machine 300, the connection structure may include a bus topology, a token and a bus topology and a token and ring topology. Moreover, the communication interfaces 60 may be connected to each other over either a wired network or radio network. In addition, while the connection is shown in FIG. 3 in the form of a specific connection like LAN, it doesn't matter if it is structured such that the management machine 300 and the slot machines 1 are connected to each other through various communication networks like a data communication network such as WAN or ISDN. The communication interface 60 executes mutual transformation operation and communication protocol operation between data and electrical signals in modes to suit communication modes between the management machine 300 and the slot machines 1.

Further, while the respective slot machines 1 take the form of a hardware structure shown in FIG. 2, only the communication interfaces 60 and associated microcomputers 61 are shown in FIG. 3 and illustrations of other associated component parts are herein omitted.

Upon principal operation of the slot machine 1 to execute major operations, the Mystery jackpot system is realized according to the present invention. A structural example of the microcomputer 61 is described hereunder.

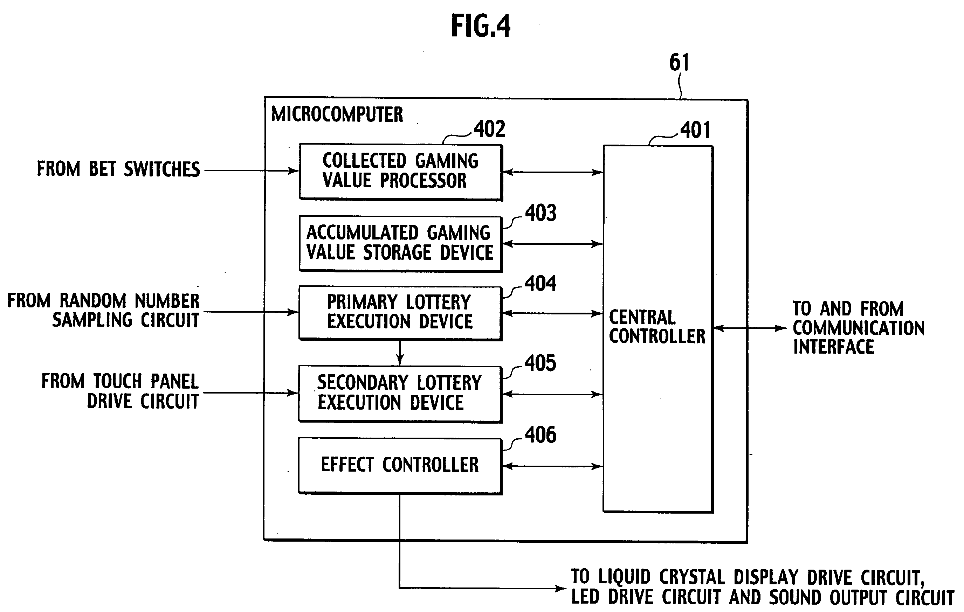

FIG. 4 is a functional block diagram of the microcomputer 61 of each slot machine 1. The microcomputer 61 is comprised of a central controller 401, connected to the communication interface 60, a collected gaming value processor 402 connected to the central controller 401, an accumulated gaming value storage device 403, a primary lottery execution section 404, a secondary lottery execution section 405 and an effect controller 406.

The central controller 401 serves to perform functions such as determinations, controls and adjustments on operations of the various component parts 402 to 406. The collected gaming value processor 402 has functions to calculate/determine a collected gaming value, which will be described below, depending on notifications delivered from the BET switches 38 to 40. The accumulated gaming value storage device 403 has a function to store and hold an accumulated gaming value that will be described below.

The primary lottery execution section 404 executes a first lottery as to whether or not the player of the slot machine 1 is able to obtain the accumulated gaming value that is a premium of the Mystery jackpot game. With the presently filed embodiment, the primary lottery execution section 404 allows a random number to be obtained from the random number sampling circuit 36 for thereby causing the winning to occur at a predetermined probability based on the resulting random number. For instance, in order to cause the winning at a 1/130 probability, the random number is generated in the random number sampling circuit 36 within a range from "1" to "130" and the primary execution section 404 obtains the random number at a predetermined timing upon which if the resulting random number is "7", then, such an occurrence is dealt to be won whereas in other cases, a credit is dealt to be lost. Also, with the presently filed embodiment, although the predetermined timing is dealt to be timing at which the symbols are started to provide variable displays, other events may be treated as a trigger of the lottery and, for instance, it doesn't matter if the variable displays are caused to stop when the BET switches 38 to 40 are pressed.

The primary lottery execution section 404 executes the secondary lottery execution section 405, which will be described later, to start operations when the outcome of the relevant lottery results in the "winning".

The secondary lottery execution section 405 is operative to execute a second lottery in accordance with an operation start command which is sent from the primary lottery execution section 404 as to whether or not the player of the slot machine 1 is able to obtain an accumulated gaming value, which is a premium of the Mystery jackpot system, whereby when the outcome of the lottery results in the winning, the occurrence of the winning is notified to the management machine 300 to enable the player to obtain the accumulated gaming value, functioning as a winning premium, of the Mystery jackpot game while providing the notification of the winning to the management machine 300.

The second lottery may preferably include a lottery method that is carried out in a way different from the first lottery. With the presently filed embodiment, the secondary lottery execution section 405 takes the form of a structure wherein the player is provided with a plurality of alternatives, either one of which is dealt to be won, and when the player selects an alternative corresponding to the winning, the secondary lottery execution section 405 determines that the alternative is won. In order to provide the player with the alternatives, the secondary lottery execution section 405 outputs a command to the liquid crystal drive circuit 53 to allow the plurality of alternatives to be displayed on a screen. As the player touches the touch panel 55 for the purpose of designating either one of the alternatives, coordinate information is, indicative of a contact position, is delivered from the touch panel drive circuit 54 to the secondary lottery execution section 405, whereby the secondary lottery execution section 405 determines based on the coordinate information as to whether or not the alternative, corresponding to the winning, is selected.

The effect controller 706 has a function to output commands to the liquid crystal drive circuit 53, the LED drive circuit 56 and the sound output circuit 58 for the purpose of allowing predetermined effects to be executed under circumstances where the winning occurs on the accumulated gaming value in the own slot machine 1 or under circumstances where the management machine 300 provides a notification that the winning occurs in other slot machine 1.

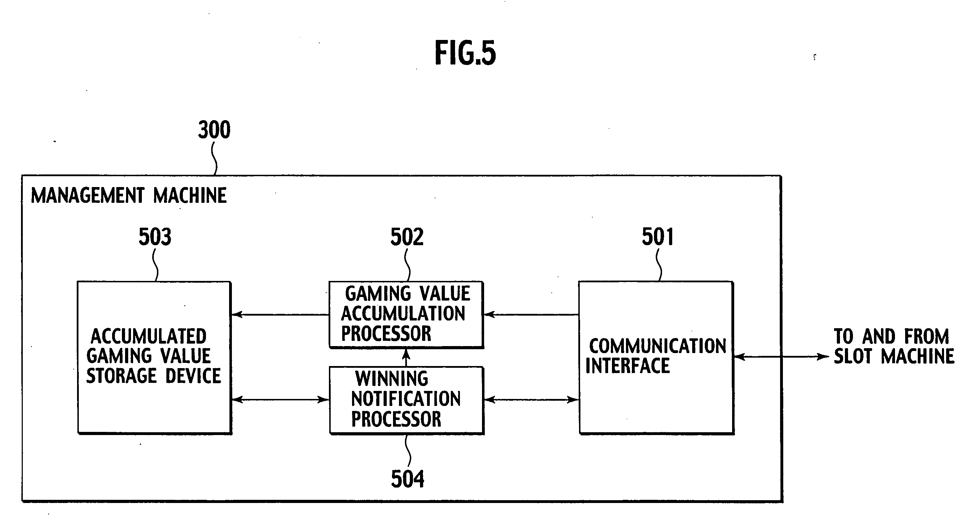

Next, the management machine 300 is described with reference to FIG. 5.

The management machine 300 functions as a device operative to communicate with the slot machines 1 through a communication interfaces 501, respectively, and includes an information processing device that is comprised of a central processing unit (CPU), a main memory (RAM), a read only memory (ROM), an input and output device (I/O) and an external storage device such as a hard disc, if needed. The management machine 300 includes an information processing device such as, for instance, a computer, workstation and an LSI (large-scale integration) or the like. The management machine 300 stores therein a program, available for the information processing device such as the ROM, described above, or the hard disc device to function as the management machine 300, which is installed on the main memory to render the CPU operative to realize the management machine 300. Also, the program, mentioned above, may not be necessarily stored in a storage device inside the information processing device and may take the form of a structure wherein the program is provided from an outside device (such as, for instance, an ASP (a server, etc., of an application service provider)) and installed on the main memory.

As shown in FIG. 5, the management machine 300 further includes a gaming value accumulation processor 502 connected to the communication interface 501, a winning notification processor 504, and an accumulated gaming value storage device 503 connected to the gaming value accumulation processor 502 and the winning notification processor 504.

The communication interface 501 executes mutual alteration and communication protocol operation between data and electric signals in conformity to a communication mode between the management machine 300 and the slot machines 1.

Upon receipt of a value of a collected gaming value notified from each slot machine 1 via the communication interface 501, the gaming value accumulation processor 502 is operative to add a received value (collected gaming value) to the value of the accumulated gaming value stored in the accumulated gaming value storage device 503.

The accumulated gaming value storage device 503 has a function to store a value of the accumulated gaming value, resulting from the addition, delivered from the gaming value accumulation processor 502 for delivery to the winning notification processor 504 depending on needs.

The winning notification processor 504 serves to read out a value of the accumulated gaming value, stored in the accumulated gaming value storage device 503, in response to and at a point of receipt of the win notification outputted from each slot machine 1 via the communication interface 501, for transmission of at least a part of the value of the accumulated gaming value and an effect command to the slot machine 1, from which the win notification is provided, via the communication interface 501, while transmitting the notification, indicative of the occurrence of the win, and associated effect command or the like to the other slot machines 1. Further, the winning notification processor 504 operates to command the gaming value accumulation processor 502 so as to allow the notified part of the value of the accumulated gaming value to be subtracted to cause the gaming value accumulation processor 502 to execute subtracting operation for storing a value, resulting upon the subtraction, in the accumulated gaming value storage device 503.

Upon the execution of the subtracting operation mentioned above, the winning notification processor 504 transmits the value of the accumulated gaming value, resulting from the subtraction, to the respective slot machines 1 via the communication interfaces 501. This enables the player to know the remaining amount subsequent to the win payout of the Mystery jackpot in the respective slot machines 1.

As set forth above, with such Mystery jackpot system, since the occurrence of the win on the Mystery jackpot is notified to the slot machine, in which the win occurs, and the other slot machines (i.e., slot machines with no occurrence of the win), not only the player, who won in the credit, but also players (players who lost in the credit) of the other slot machines 1 and a gallery who watches over a progress of the game practiced by the players are able to easily confirm, with either the liquid crystal display device 3 or the liquid crystal display device 4, when the Mystery jackpot, indicative of the accumulated gaming value, is obtained. This provides a capability of providing an increase in interests of the player, who obtained the Mystery jackpot, to bring a lot of excitations in seasoning. Moreover, under circumstances where a plurality of the Mystery jackpots are set in the same Mystery jackpot system, the presence of the winning can be notified for each Mystery jackpot that is set. This enables the player to easily confirm whether a common bonus, related to any of the progressive bonuses, is obtained.

### [2. Example of Operation]

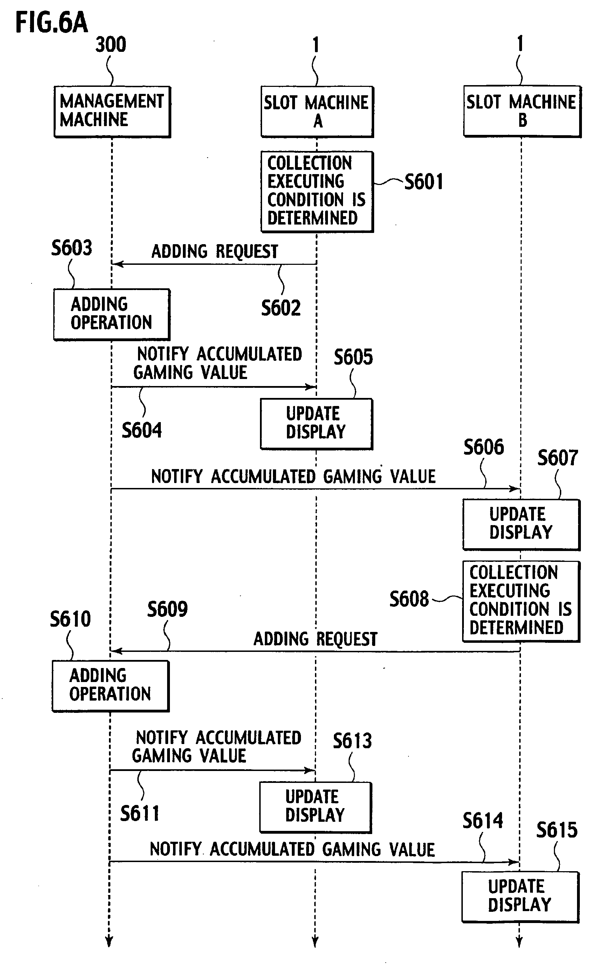

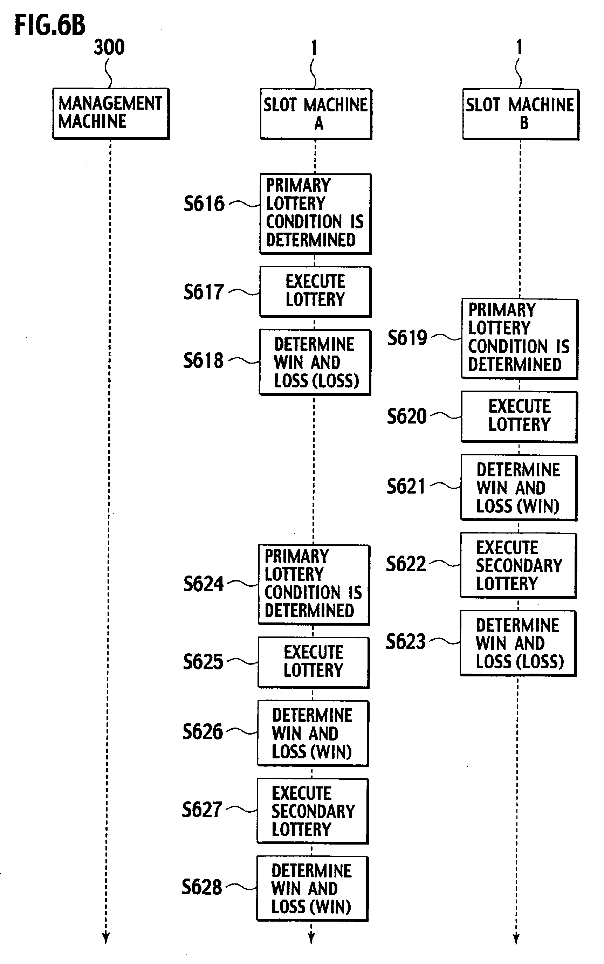

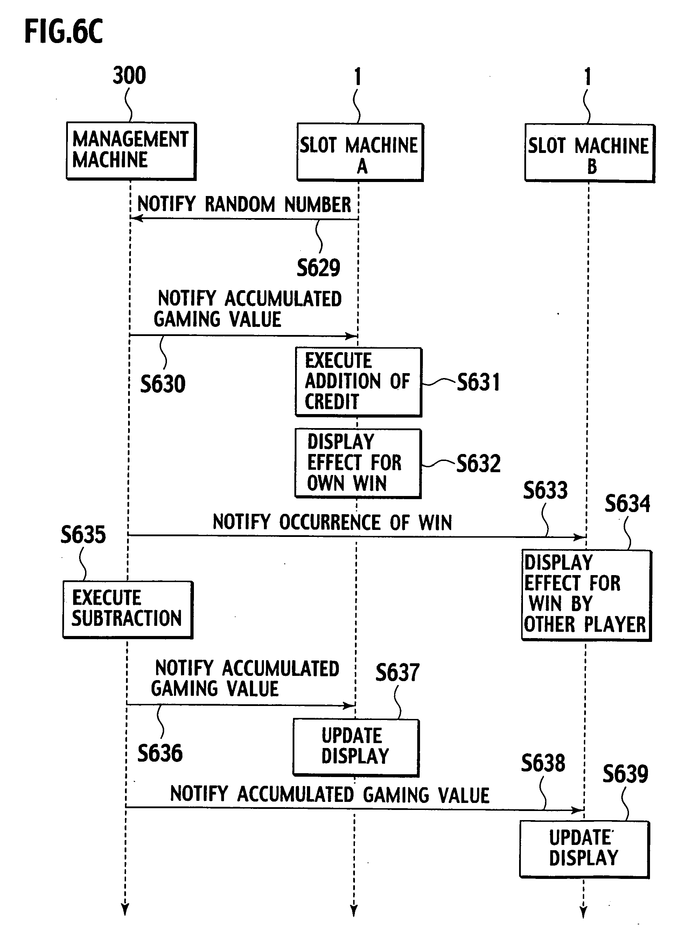

Now, an operation example of the Mystery jackpot system of the presently filed embodiment is described with reference to FIGS. 6A, 6B and 6C.

First, suppose that a predetermined collection executing condition, such as the start of variable movements of the symbols, occurs in a slot machine A (S601). The Mystery jackpot system is configured such that each slot machine 1 provides the management machine 300 with information of a collected gaming value, indicative of a predetermined gaming value, for each occurrence of the collection executing condition to allow the transferred collected gaming value to be accumulatively added in the management machine 300 whereby such "an accumulated gaming value" is credited to a winning object on condition of the occurrence of the winning. Upon the occurrence of the collection executing condition, the gaming values collected from the respective slot machines 1 are added to the cumulative collection value at such a time point. Also, the collection executing condition may be selected from those of various items.

Upon the occurrence of the collection executing condition, the slot machine A calculates the collected gaming value based on a predetermined calculation formula to cause the resultant calculated value to be notified with an adding request to the management machine 300 (S602).

Next, upon receipt of such notification, the management machine 300 operates at this point to add the notified collected gaming value to the accumulated gaming value stored in the accumulated gaming value storage device 503 (S603).

After the adding operation has been completed (S603), the management machine 300 provides an accumulated gaming value notification to all the slot machines 1 (including the slot machine A and a slot machine B in this example) notifying the accumulated gaming value that is updated upon executing the adding operation (S604, S606). Upon receipt of the notification, the slot machines 1 displays the notified updated accumulated gaming value as new amount of premium of the Mystery jackpot on the displays 3 or 4 of the respective slot machines 1 (S605, S607). This makes it possible for the respective players to grasp the present gaming values (premium), which can be obtained in the Mystery jackpot.

In the meanwhile, upon the occurrence of the collection executing condition, the other slot machine 1 (in this example, for example, the slot machine B) executes the operation to add the collected gaming value to the accumulated gaming value and the operation to notify the accumulated gaming value. That is, if the collection executing condition occurs on the slot machine B (S608), the slot machine B calculates the collected gaming value using a predetermined calculation formula or the like, giving notification of the resultant calculated value with an adding request to the management machine 300 (S609).

Next, upon receipt of the notification, the management machine 300 adds the collected gaming value, which is notified from the slot machine B, to the accumulated gaming value already stored in the accumulated gaming value storage device 503 at this time point (S610).

After the adding operation has been completed (S610), the management machine 300 provides the accumulated gaming value notification to notify the respective slot machines A and B with the accumulated gaming value updated upon execution of the adding operation (S611, S655). Upon receipt of this notification, the respective **slot machines** 1 display the updated accumulated gaming value as new amounts of premium of the Mystery jackpot on the displays 3 or 4 of the respective slot machines 1 (S613, S614). This makes it possible for the respective players to grasp the present gaming value, to be obtained by the Mystery jackpot.

Thus, each time the collection executing condition occurs in the respective slot machines 1, the collected gaming value is added to the accumulated gaming value stored in the management machine 300, increasing the value of the accumulated gaming value until the accumulated gaming value is paid out.

By the way, with the Mystery jackpot system, the respective slot machines 1 always monitor whether or not a predetermined primary lottery condition occurs.

Although the primary lottery condition may include any kind of conditions, in this example, the respective slot machines are supposed to perform random lotteries using the random numbers that are triggered when the variable displays of the symbols are started.

Now, suppose that with the slot machine A, the SPIN/REPEAT switch 37 is pressed to start the variable displays of the symbols with the resultant occurrence of the primary lottery condition (S616). This occurrence is detected by the primary lottery execution section 404 of the slot machine A; by which the primary lottery is executed (S617). Here, a credit was lost in the outcome of the primary lottery (S618). The slot machine A terminates the lottery of the Mystery jackpot without sending any notification to the management machine 300.

Next, description is made of an operation example of the slot machine 1 in cases, where the credit is won in the primary lottery but lost in the secondary lottery, taking the slot machine B as an example.

First, like the manner as set forth above, it is supposed that with the slot machine B, the SPIN/REPEAT switch 37 is pressed to start the variable displays of the symbols with the start of the primary lottery condition (S619). This occurrence is detected by the primary lottery execution section 404 of the slot machine B by which the primary lottery is executed (S620). Meanwhile, with this example, it is also supposed that the result of the primary lottery of the S620 is won (S623). Then, the primary lottery execution section 404 of the slot machine B commands the secondary lottery execution section 405 to start the secondary lottery. The secondary lottery execution section 405 executes the secondary lottery in a method under which alternatives are provided to the player in response to the command, set forth above, for selection (S622). With this example, it is supposed that the credit is lost in the outcome of the secondary lottery (S623). As a result of secondary lottery, the slot machine B terminates the lottery on the Mystery jackpot without sending any notification to the management machine 300.

Next, description is made of operation examples of the slot machine 1 and the management machine 300 in cases where the credits are won in both outcomes of the primary and secondary lotteries to execute the payout of the Mystery jackpot.

First, suppose that with the slot machine A, the SPIN/REPEAT switch 37 is pressed to start the variable displays of the symbols with the start of the primary lottery condition (S624). With the slot machine A, the symbols are stopped and displayed after the start of the variable displays of the symbols, thereby executing an original gaming operations (not shown) of the gaming machine with the resultant occurrences of a normal winning and a bonus game depending on statuses of the symbols stopped in displays 3, 4.

Aside from the original gaming operation of the slot machine, the primary lottery execution section 404 of the slot machine A detects the occurrence of the primary lottery condition, upon which the primary lottery is executed (S625). Here, suppose that a credit is won in the outcome of the primary lottery (S626). Then, the primary lottery execution section 404 of the slot machine A commands the secondary lottery execution section 405 to begin the secondary lottery. The secondary lottery execution section 405 executes the secondary lottery in a method under which alternatives are provided to the player in response to the command, set forth above, for selection (S627). With this example, suppose that the credit is won in the outcome of the secondary lottery (S628). As a result of the secondary lottery, the payout of the Mystery jackpot for the slot machine A is decided.

Hereunder, an operation example, to be executed after the winning occurs on the secondary lottery, is described below with reference to FIG. 6C.

Now, after the outcome of the secondary lottery appears to be won (S628), the slot machine A, subjected to the occurrence of the winning, transmits a winning occurrence notification to the management machine 300 (S629).

Upon receipt of the winning occurrence notification, the management machine 300 provides notification to the slot machine A, to which the accumulated gaming value is to be paid out, with a prize gaming value which is a whole of or a part of the value of the accumulated gaming values stored in the accumulated gaming value storage device 503 (S630).

Upon receipt of the notification of the prize gaming value, the slot machine A executes a credit adding operation (S631). That is, the slot machine 1 executes the operation to add the value of the prize gaming value, notified from the management machine 300, to the value (values of coins, already inserted by the player, and a credit) of the credit stored at the time when the notification is received and a value, resulting from the addition, is stored and kept as a value of a new credit. That is, this results in a capability for the player to receive the payment of the credit or the like resulting from the winning on the so-called jackpot.

Further, the slot machine A performs the credit adding operation (S631), while executing an own winning effect (S632). For instance, the effect controller 40 of the slot machine A is started up to provide effects in such a way to cause the LEDs 57 to be blinked in a predetermined pattern and cause the speaker 59 to sound a fanfare, a winning blessing music, etc., while providing a display of a message "CONGRATURATION! YOU WIN MYSTERY JACKPOT! WINNING CREDIT IS OOOO!" or the like on the liquid crystal displays 3 or 4.

By the way, upon receipt of the winning occurrence notification in step S629, the management machine 300 transmits a winning occurrence notification to allow the player of the other slot machine B to be notified with the occurrence of winning (S633). Upon receipt of such a winning occurrence notification, the slot machine B renders the effect controller 406 operative to start up, thereby causing a winning notification effect to be executed. For instance, various effects are executed such that the LEDs 57 are blinked in a predetermined pattern while providing a display of a message "SOMEBODY HITS MYSTERY JACKPOT! ", etc., on the liquid crystal displays 3 or 4.

Next, the management machine 300 regulates a value, stored in the accumulated gaming value storage device 503, in association with the credit adding operation of the slot machine A in which the winning occurs, thereby executing a subtracting operation of the value of accumulated gaming value (S635). The subtracting operation may include a method of resetting the value, stored in the accumulated gaming value storage device 503 to an initial value (an arbitrary value such as, for instance "0", "100", etc.) and it doesn't matter if a method is employed by which the amount of payment is subtracted from the value stored prior to the payment.

After the subtracting operation has been completed (S635), the management machine 300 transmits a residue accumulated gaming value notification, involving the accumulated gaming value, for the purposes of providing notification to the slot machines A, B with the value of the accumulated gaming value stored in the accumulated gaming value storage device 503 (S636, S638). Upon receipt of such notification, the slot machines A, B update the displays of the present accumulated gaming value (S637, S639). This makes it possible for the players of the respective slot machines A, B to grasp the present gaming value.

Also, the Mystery jackpot system repeatedly executes the operations to add the collected gaming values mentioned above, execute the lottery and payout the accumulated gaming value for the occurrence of the winning in subsequent stages, thereby continuously providing the players with entertaining and exciting values of a so-called Mystery jackpot game.

### [3. Other Features]

While the presently filed embodiment has been described with reference to an example wherein the management machine 300 is comprised of a separate device independent from the slot machine 1, however it is also possible to provide the management machine 300 integrally formed with any one of the slot machines 1 constituting the Mystery jackpot system. For instance, a modified form of the presently filed embodiment may be considered to have a structure in which a board (such as a mother board), on which a microcomputer with a function corresponding to the management machine 300 is installed, is mounted on the slot machine 1 to allow the board to be connected to the microcomputer 61 of the slot machine 1.

According to the present invention, the Mystery jackpot system makes it possible to perform complicated lottery and effects without causing a host computer from bearing a load. Also, while the present invention has been described above taking a Pachi-Slot machine for domestic use as an example, the present invention may have application to slot machines manufactured for foreign countries.

The entire content of Japanese Patent Application No. 2004-316295, filed on October 29, 2004 is herein incorporated by reference.

Although the invention has been described above by reference to certain embodiments of the present invention, the invention is not limited to the embodiments described above and will occur to those skilled in the art, in light of the teachings. The scope of the invention is defined with reference to the following claims.

## Claims

1. A gaming system comprising:
a management machine (300); and
a gaming machine (1) communicably connected to the management machine and which is configured to execute a base game when a player of the gaming system credits a gaming value and transmit a collected gaming value being a part of the gaming value credited by the player to the management machine, wherein
the management machine stores an accumulated gaming value obtained upon adding the collected gaming value transmitted from the gaming machine, and
the gaming machine executes a lottery for a bonus game, which is a game different from the base game, for determining whether a win of the bonus game is determined, and when the win is determined, the gaming machine sends a notification to the management machine, and upon the management machine receives the notification, the management machine transmit a value of a whole of or a part of the accumulated gaming value to the gaming machine from which the win is notified.

2. A gaming system comprising:
a management machine (300); and
a gaming machine (1) executing a base game depending on a gaming value credited by a player,
wherein the management machine includes:
a communication means (501) enabling communication with the gaming machine, and an accumulation processing means (502) collecting a collected gaming value by collecting a part of the credited gaming value received from the gaming machine via the communication means to generate/store as an accumulated gaming value; and
the gaming machine includes:
a communication means (60) enabling communication with the management machine;
a base game processor (61) executing the base game depending on the gaming value credited by the player, a collection notification means (61) notifying the collected gaming value, associated with the credited gaming value, to the management machine, and a lottery means (61) executing a lottery, related to the accumulated gaming value stored in the management machine, to allow a win of the lottery to be notified to the management
machine.

3. The gaming system according to claim 2, wherein
the lottery means includes a first lottery execution means (404) determining win and loss on a first lottery, and a second lottery execution means (405) determining win and loss on a second lottery when the winning is determined by the first lottery execution means.

4. A gaming machine (1) wherein a base game is executed depending on a gaming value credited by a player and a bonus game is provided in relation to a provision of an accumulated gaming value obtained by accumulating at least a part of the credited gaming value, the gaming machine comprising:
a base game processing means (61) providing the base game depending on a gaming value credited by the player;
a collection processing means (61) determining a collected gaming value depending on the credited gaming value; and
a lottery means (61) executing a lottery related to an acquisition of an accumulated gaming value generated by accumulating the collected gaming value determined by the
collection processing means.

5. The gaming machine according to claim 4, wherein the lottery means includes a first lottery execution means (404) determining win and loss on a first lottery, and a second lottery execution means (405) determining win and loss on a second lottery when the first lottery means determines success of a win.

6. The gaming machine according to claims 4 or 5, further comprising:
an accumulation processing means (403) operative to generate and store an accumulated gaming value by adding a collected gaming value forming at least a part of the credited gaming value.
